# EUROPÄISCHE PATENTANMELDUNG

(11) **EP 2 305 024 A2**
(43) Veröffentlichungstag der Anmeldung: **06.04.2011**
(21) Anmeldenummer: 10010009.8
(22) Anmeldetag: 21.09.2010
(51) Int. Cl.: A01G 23/00

(54) **Holzrückezange**

(30) Priorität: 01.10.2009 AT 15482009
(71) Anmelder: Burtscher, Andreas, 6934 Sulzberg (AT)
(72) Erfinder: Burtscher, Andreas, 6934 Sulzberg (AT)
(74) Vertreter: Hofmann, Ralf U.

(57) **Zusammenfassung**

Eine Holzrückeeinrichtung für ein Zugfahrzeug (1), umfasst einen Ausleger (5), der mittels eines ersten Stellantriebs (12) um eine horizontale Ausleger-Schwenkachse (8) und mittels eines zweiten Stellantriebs (15) um eine vertikale Ausleger-Schwenkachse (9) verschwenkbar ist, und einen vom Ausleger (5) getragenen Greifer (6) zum Greifen mindestens eines Baumstammes (35), der um eine horizontale Greifer-Schwenkachse (20) gegenüber dem Ausleger (5) verschwenkbar ist. Der Greifer (6) ist mittels eines Greifer-Stellantriebs (21) um die horizontale Greifer-Schwenkachse (20) verschwenkbar und der erste Stellantrieb (12) ist freischaltbar.

## Beschreibung

Die Erfindung bezieht sich auf eine Holzrückeeinrichtung für ein Zugfahrzeug, welche einen Ausleger, der mittels eines ersten Stellantriebs um eine horizontale Ausleger-Schwenkachse und mittels eines zweiten Stellantriebs um eine vertikale Ausleger-Schwenkachse verschwenkbar ist, und zum Greifen mindestens eines Baumstammes einen vom Ausleger getragenen Greifer umfasst, der um eine horizontale Greifer-Schwenkachse gegenüber dem Ausleger verschwenkbar ist, wobei der erste Stellantrieb freischaltbar ist. Weiters bezieht sich die Erfindung auf ein Verfahren zum Holzrücken mittels einer an einem Zugfahrzeug angebrachten Holzrückeeinrichtung, welche einen Ausleger, der mittels eines ersten Stellantriebes um eine horizontale Ausleger-Schwenkachse und mittels eines zweiten Stellantriebes um eine vertikale Ausleger-Schwenkachse verschwenkbar ist, und zum Greifen mindestens eines Baumstammes einen vom Ausleger getragenen Greifer umfasst, der um eine horizontale Greifer-Schwenkachse gegenüber dem Ausleger verschwenkbar ist.

Als Holzrücken, auch Holzbringung genannt, wird der Transport von gefällten Bäumen innerhalb des Waldes zu einem Weg bezeichnet, von dem aus die Stämme, z. B. per Langholzwagen, abtransportiert werden. Bekannt sind Holzrückeeinrichtungen, die als Anbaugeräte für Zugfahrzeuge, insbesondere Traktoren, angeboten werden. Üblicherweise werden diese Holzrückeeinrichtungen an der Dreipunkthydraulik des Traktors angekuppelt. Solche Holzrückeeinrichtungen werden auch als Rückezangen oder Holzrückezangen bezeichnet.

Solche herkömmlichen Holzrückeeinrichtungen umfassen einen Ausleger, der um eine horizontale und eine vertikale Achse mittels entsprechenden Stellantrieben, beispielsweise Kolben-Zylinder-Einheiten verschwenkbar ist. Am freien Ende dieses Auslegers ist ein Greifer zum Fassen des zu rückenden Baumstammes oder der zu rückenden Baumstämme, meist über ein Kreuzgelenk, angekoppelt. Zum Transport der Baumstämme werden diese im Bereich eines ihrer Enden gegriffen und durch Verschwenkung des Auslegers um seine horizontale Achse angehoben, worauf sie hinter dem Zugfahrzeug hergezogen werden, während ihr vom Zugfahrzeug abgewandtes Ende auf dem Boden aufliegt und über diesen schleift. In Abhängigkeit von der Größe der Baumstämme können diese zum Transport auch insgesamt angehoben sein. Wenn mindestens ein Baumstamm mit seinem vom Zugfahrzeug abgewandten Ende auf dem Boden aufliegend vom Zugfahrzeug geschleppt wird, so wird die Verschwenkung des Auslegers um die vertikale Achse freigegeben, um eine Kurvenfahrt zu ermöglichen. Hierzu kann der Stellantrieb, mit dem der Ausleger um die vertikale Achse verschwenkbar ist, freigeschaltet werden, so dass er der Verschwenkung um die vertikale Achse keinen Widerstand entgegensetzt.

Beim Nachziehen eines Baumstammes mittels dieser herkömmlichen Holzrückeeinrichtung wird auf das Zugfahrzeug eine im Sinne einer Anhebung der Vorderachse wirkende Kraft ausgeübt, durch die der ausübbare Zug begrenzt wird.

Aus der DE 9106836 U1 ist ein Arbeitsgerät zur Handhabung von Masten, Pfählen und dergleichen bekannt. Ein solches Arbeitsgerät dient zum Anbau an ein mobiles Hebegerät, beispielsweise an einen Hubausleger eines Krans, mit dem ein LKW ausgerüstet ist. Das Arbeitsgerät besitzt voneinander beabstandete Greiferzangen, mit denen der Mast gehalten werden kann. Der gehaltene Mast kann hierbei transportiert und auch in eine aufrecht stehende Lage aufgestellt werden. Mobile Hebegeräte wie mobile Kräne, Radlader oder Bagger, an die der Anbau dieses Arbeitsgerätes erfolgt, sind nicht an den Einsatz im Wald angepasst und unter anderem aufgrund der Kompliziertheit seiner Ausbildung wäre eine solches an ein mobiles Hebegerät angebautes Arbeitsgerät zum Holzrücken nicht vorteilhaft einsetzbar.

Eine Holzrückeeinrichtung der eingangs genannten Art geht aus der SU 563141 A1 hervor. Mit dem am Ausleger verschwenkbar angeordneten Greifer wird der mindestens eine Stamm gefasst und in der Folge mit dem Ausleger auf das Ende des Zugfahrzeugs angehoben. Der Greifer wird auf Ablagen abgesenkt und die den Ausleger betätigenden Stellantriebe werden freigeschaltet.

Aus der DE 25 55 330 A1 geht eine Holzrückeeinrichtung hervor, wobei die Holzrückezange am hydraulischen Hubwerk eines Traktors angeordnet ist. Die Holzrückezange ist mittels Stellantrieben um horizontale und vertikale Achsen verschwenkbar.

Aufgabe ist es, eine Holzrückeeinrichtung der eingangs genannten Art bzw. ein Verfahren der eingangs genannten Art bereit zu stellen, durch die bzw. durch das höhere Lasten beim Holzrücken ermöglicht werden und/oder das Fahrverhalten des Transportfahrzeuges beim Holzrücken verbessert wird. Erfindungsgemäß gelingt dies durch eine Holzrückeeinrichtung mit den Merkmalen des Anspruchs 1 bzw. durch ein Verfahren mit den Merkmalen des Anspruchs 11.

Bei der erfindungsgemäßen Holzrückeinrichtung bzw. beim erfindungsgemäßen Verfahren ist vorgesehen, den Greifer, von dem der mindestens eine zu transportierende Baumstamm gefasst wird, mittels eines Greifer-Stellantriebs um eine horizontale Greifer-Schwenkachse gegenüber dem Ausleger verschwenkbar auszubilden. Weiters ist der erste Stellantrieb, mittels dem der Ausleger um die horizontale Ausleger-Schwenkachse verschwenkbar ist, freischaltbar, d. h. dass der Ausleger im freigeschalteten Zustand des ersten Stellantriebs frei um die horizontale Ausleger-Schwenkachse drehbar ist, ohne dass dieser Drehung vom ersten Stellantrieb eine Haltekraft entgegengesetzt wird. Wenn der erste Stellantrieb beispielsweise von einer Kolben-Zylinder-Einheit ausgebildet wird, so können zu diesem Zweck die beidseits des Kolbens liegenden Zylinderkammern im freigeschalteten Zustand miteinander verbunden sein, z. B. über eine Leitung oder auch intern, so dass eine Art "Kurzschluss" für die Hydraulikflüssigkeit ausgebildet wird.

Zum Transportieren eines Baumstammes wird dieser vom Greifer gefasst, vorzugweise im Bereich eines Endes, und bei freigeschaltetem ersten Stellantrieb wird der Greifer mittels des Greifer-Stellantriebs um die horizontale Greifer-Schwenkachse derart verschwenkt, dass sich das dem Zugfahrzeug zugewandte Ende des Baumstamms vom Boden abhebt. Der Baumstamm kann nunmehr vom Zugfahrzeug gezogen werden, wobei die auf die Vorderachse des Zugfahrzeugs im Sinne einer Anhebung der Vorderachse wirkende Kraft gegenüber herkömmlichen Holzrückeeinrichtungen wesentlich verringert ist.

Denkbar und möglich ist es auch, mehr als einen Baumstamm gleichzeitig zu fassen und zu ziehen.

Beim Transport des mindestens einen Baumstamms durch Nachziehen hinter dem Zugfahrzeug ist vorzugsweise auch der zweite Stellantrieb, mittels dem der Ausleger um die vertikale Achse verschwenkbar ist, in herkömmlicher Weise freigeschaltet, um eine Kurvenfahrt zu ermöglichen bzw. zumindest zu erleichtern.

In einer vorteilhaften Ausführungsform ist eine elektrische Steuerung vorhanden, von der eine Freischaltung des ersten Stellantriebs und des zweiten Stellantriebs nur dann freigegeben wird, wenn der Greifer-Stellantrieb unter Last steht, und zwar in die Richtung, in die der Greifer geschlossen wird. Es wird dadurch verhindert, dass der erste Stellantrieb und der zweite Stellantrieb beispielsweise in einer nach oben verschwenkten Transportstellung des Auslegers, in welcher der Greifer keinen Baumstamm greift, freigeschaltet werden.

Vorteilhafterweise ist zur um die horizontale und vertikale Achse verschwenkbaren Lagerung des Auslegers eine Lagereinheit vorgesehen, an der der Ausleger verschwenkbar gelagert ist und die im am Zugfahrzeug montierten Zustand der Holzrückeeinrichtung ihrerseits verschwenkbar mit dem Zugfahrzeug verbunden ist. Günstigerweise ist hierbei der Ausleger um die horizontale Ausleger-Schwenkachse verschwenkbar mit der Lagereinheit verbunden und die Lagereinheit ihrerseits um die vertikale Ausleger-Schwenkachse verschwenkbar mit dem Zugfahrzeug verbunden.

Um die auftretenden Lasten, insbesondere Drehmomente, möglichst gering zu halten, ist es bevorzugt, dass die Anlenkung des Auslegers an der Lagereinheit, bezogen auf die Vorwärtsfahrtrichtung des Zugfahrzeuges weiter vorne liegt, als die Anlenkung der Lagereinheit am Zugfahrzeug oder an einem mit diesem verbundenen Teil, beispielsweise einer Trageinheit, die am Zugfahrzeug, z. B. an einer Dreipunkthydraulik befestigt ist.

Weitere Vorteile und Einzelheiten der Erfindung werden im Folgenden anhand der beiliegenden Zeichnungen erläutert. In dieser zeigen:
- Fig. 1: eine schematische Darstellung einer an einem Zugfahrzeug montierten erfin- dungsgemäßen Holzrückeeinrichtung beim Transport eines Baumstammes, in Sei- tenansicht;
- Fig. 2: einen Endabschnitt des Auslegers mit dem Greifer beim Greifen eines auf dem Boden liegenden Baumstammes

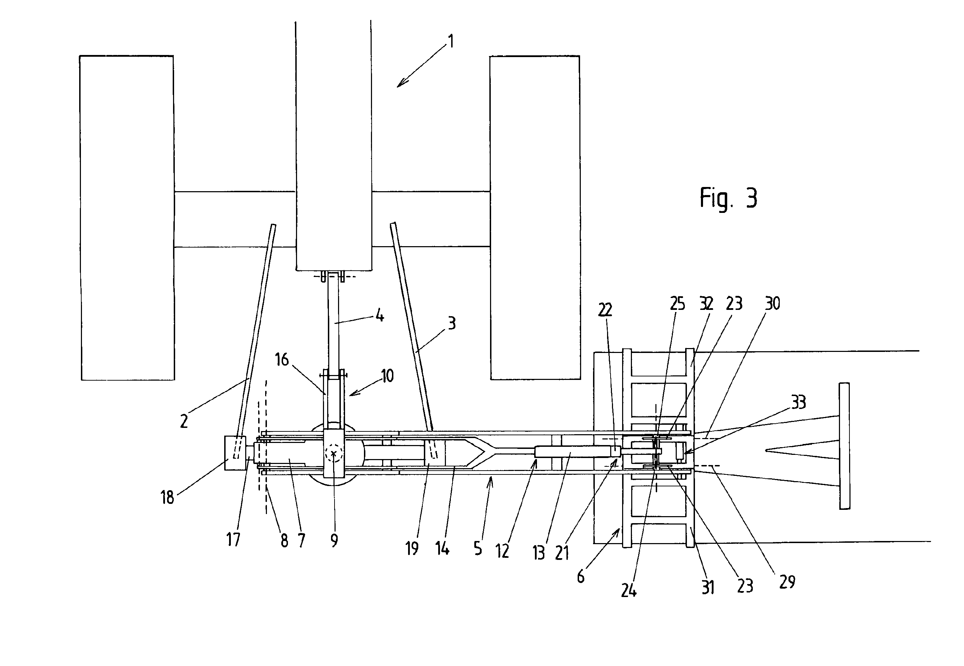

- Fig. 3: eine schematische Draufsicht, wobei der Ausleger gegenüber Fig. 1 um 90° um die horizontale Ausleger-Schwenkachse verschwenkt ist.

Ein Ausführungsbeispiel einer Holzrückeeinrichtung wird im Folgenden anhand der Figuren erläutert. Die Holzrückeeinrichtung ist hier an ein Zugfahrzeug 1 in Form eines Traktors angebaut, und zwar an dessen Dreipunkthydraulik. Von dieser sind der Übersichtlichkeit halber nur die beiden Unterlenker 2, 3 und der Oberlenker 4 dargestellt.

Auch ein anderer Anbau an einen Traktor oder der Anbau an ein anderes Zugfahrzeug, beispielsweise einen Forwarder, ist denkbar und möglich. Der Anbau kann hierbei auch an ein starres Teil des Zugfahrzeugs erfolgen.

Die Holzrückeeinrichtung umfasst einen Ausleger 5, der im am Zugfahrzeug 1 montierten Zustand der Holzrückeeinrichtung vom Zugfahrzeug 1 getragen wird und im Bereich von dessen freiem Ende ein Greifer 6 mit dem Ausleger 5 verbunden ist. Im Bereich seines anderen Endes ist der Ausleger 5 an einer Lagereinheit 7 um eine horizontale Ausleger-Schwenkachse verschwenkbar gelagert. Die Lagereinheit 7 ist ihrerseits an einer Trageinheit 10 um die vertikale Ausleger-Schwenkachse 9 verschwenkbar gelagert. Durch Verschwenkung der Lagereinheit 7 um die vertikale Ausleger-Schwenkachse 9 wird der Ausleger 5 um diese vertikale Achse verschwenkt.

Im gezeigten Ausführungsbeispiel weist der Ausleger 5 beispielsweise zwei Gurte 26, 27 auf, die beidseitig der Säule 11 verlaufen und miteinander verbunden sind.

Die Trageinheit 10 ist mit dem Zugfahrzeug 1 verbunden, im gezeigten Ausführungsbeispiel durch Ankoppelung an die Unterlenker 2, 3 und den Oberlenker 4 der Dreipunkthydraulik. Zur Ausbildung der vertikalen Ausleger-Schwenkachse 9 kann die Trageinheit 10 beispielsweise, wie dargestellt, eine vertikale Säule 11 aufweisen, auf der die Lagereinheit 7 um die vertikale Achse der Säule 11 drehbar angeordnet ist.

Die Säule 11 kann beispielsweise zwischen einem oberen Träger 16 und einem unteren Träger 17 der Trageinheit 10 gehalten sein, wobei der obere Träger 16 an den Oberlenker 4 und der untere Träger 17 über Endstücke 18, 19 an die Unterlenker 2, 3 gekuppelt ist.

Zur Verschwenkung des Auslegers 5 um die horizontale Ausleger-Schwenkachse 8 dient ein erster Stellantrieb 12, der vorzugsweise von einer (oder mehreren) Kolben-Zylinder-Einheit gebildet wird. Beispielsweise kann, wie schematisch dargestellt, der Zylinder 13 dieser Kolben-Zylindereinheit am Ausleger 5 befestigt sein und der Kolben dieser Kolben-Zylinder-Einheit über ein Gestänge 14 mit der Lagereinheit 7 verbunden sein.

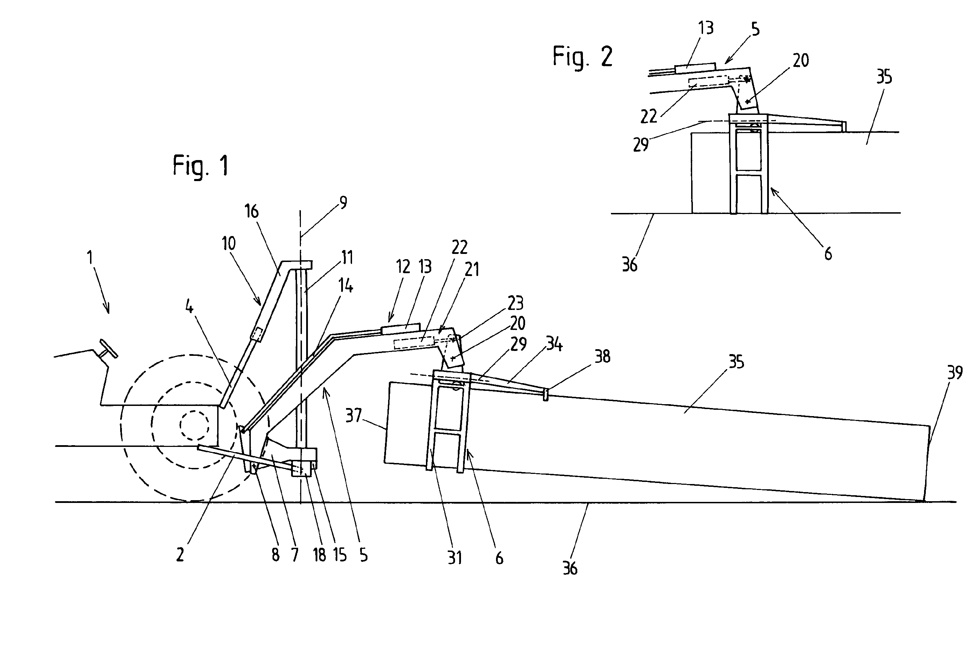

Zur Verschwenkung der Lagereinheit 7 und damit des Auslegers 5 um die vertikale Ausleger-Schwenkachse 9 dient ein zweiter Stellantrieb 15, der in Fig. 1 schematisch eingezeichnet ist. Beispielsweise kann es sich hierbei um einen an der Trageinheit 10 befestigten Hydraulikmotor handeln, der mit der Lagereinheit 7 zusammenwirkt. Auch die Ausbildung in Form einer Kolben-Zylinder-Einheit ist beispielsweise denkbar und möglich. Hierzu kann z. B. der Zylinder an der Trageinheit 10 befestigt sein und die Kolbenstange als Zahnstange ausgebildet sein, die in eine ritzelförmige Verzahnung der Lagereinheit 7 eingreift.

Der Greifer 6 ist mit dem Ausleger 5 um eine horizontale Greifer-Schwenkachse 20, die rechtwinklig zur Längserstreckung des Auslegers 5 ausgerichtet ist, verschwenkbar verbunden. Zur Verschwenkung des Greifers 6 um die horizontale Greifer-Schwenkachse 20 dient ein Greifer-Stellantrieb 21, der vorzugsweise von einer (oder mehreren) Kolben-Zylinder-Einheit gebildet wird. Z. B. kann der Zylinder 22 dieser Kolben-Zylinder-Einheit am Ausleger 5 befestigt sein und die Kolbenstange der Kolben-Zylinder-Einheit an mindestens einer Lasche 23 des Greifers 6 angreifen. Im gezeigten Ausführungsbeispiel sind zwei Laschen 23 des Greifers 6 vorhanden, die durch eine Stange 24 verbunden sind, über die die Kolbenstange an den Laschen 23 angreift. Die horizontale Greifer-Schwenkachse 20 kann beispielsweise von einer zwischen den beiden Gurten des Auslegers 5 verlaufenden Stange 25 gebildet werden, auf der die Laschen 23 verschwenkbar gelagert sind.

Der Greifer 6 umfasst ein Basisstück 28, das um die horizontale Greifer-Schwenkachse 20 verschwenkbar gegenüber dem Ausleger 5 gelagert ist, beispielsweise über die nach oben abstehenden Laschen 23, und am Basisstück 28 um parallele Achsen 29, 30 verschwenkbar gelagerte Zangenteile 31, 32. Mittels eines Zangen-Stellantriebs 33, vorzugsweise einer Kolben-Zylinder-Einheit, können die Zangenteile 31, 32 geöffnet und geschlossen werden.

Im gezeigten Ausführungsbeispiel weist der Greifer 6 weiters einen Abstützarm 34 auf, dessen Funktion weiter unten erläutert wird.

In seiner Passivstellung beim Verfahren des Zugfahrzeugs ist der Ausleger 5 nach oben verschwenkt, vorzugsweise in eine gegenüber Fig. 1 weiter nach oben verschwenkte Stellung (durch Verschwenkung in der Darstellung von Fig. 1 entgegen dem Uhrzeigersinn). Die Verschwenkbarkeit um die horizontale Ausleger-Schwenkachse 8 und die Verschwenkbarkeit um die vertikale Ausleger-Schwenkachse 9 sind hierbei durch die Stellantriebe 12, 15 festgestellt.

Wenn ein Baumstamm 35 transportiert werden soll, so wird die Schwenkposition des Auslegers 5 um die vertikale Ausleger-Schwenkachse 9 zunächst mit dem zweiten Stellantrieb 15 entsprechend eingestellt. Dann wird der Ausleger 5 mit dem ersten Stellantrieb 12 um die horizontale Ausleger-Schwenkachse 8 bei geöffnetem Greifer 6 abgesenkt, bis die Zangenteile 31, 32 beidseitig des auf dem Boden 36 aufliegenden Baumstamms 35 zu liegen kommen, vgl. Fig. 2. Der Greifer 6 befindet sich hierbei bezüglich seiner Verschwenkung um die horizontale Greifer-Schwenkachse 20 in einer Neutralstellung, in welcher die Achsen 29, 30 parallel zur Längsachse des Baumstammes 35 bzw. parallel zum Boden 36 liegen. Leichte Abweichungen gegenüber dieser Normalstellung (beispielsweise bis zu Neigungen der Achsen 29, 30 von 20°) sind möglich.

Die Zangenteile 31, 32 werden mittels des Zangen-Stellantriebs 33 geschlossen, wodurch der Baumstamm 35 im Greifer 6 festgesetzt ist. In der Folge wird der erste Stellantrieb 12, von dem der Ausleger 5 um die horizontale Ausleger-Schwenkachse 8 verstellbar ist, freigeschaltet. Der zweite Stellantrieb 15 kann zu diesem Zeitpunkt oder vor dem Losfahren des Zugfahrzeugs 1 freigeschaltet werden.

In der Folge wird der Greifer 6 mittels des Greifer-Stellantriebs 21 um die horizontale Greifer-Schwenkachse 20 in eine erste Drehrichtung soweit verschwenkt, dass sich das dem Zugfahrzeug 1 zugewandte Ende 37 des Baumstammes 35 vom Boden 36 abhebt. Der Baumstamm 35 muss hierzu gegen eine Verschwenkung gegenüber dem Greifer 6 in einer Weise gesichert sein, dass er der Schwenkbewegung des Greifers 6 folgt, d. h. die Längsachse des Baumstammes 35 bleibt in paralleler Ausrichtung zu den Achsen 29, 30. Um eine Verschwenkbewegung des Baumstammes 35 gegenüber dem Greifer 6 in eine der erste Drehrichtung des Greifers 6 entgegengesetzten zweiten Drehrichtung (um die gleiche Achse) zu verhindern, wird der Baumstamm 35 vom Greifer fixiert. Im gezeigten Ausführungsbeispiel ist zu diesem Zweck auch der Abstützarm 34 vorgesehen, der eine auf der Oberseite des Baumstammes 35 aufliegende Leiste 38 aufweist. Die dem Baumstamm 35 zugewandte Unterseite dieser Leiste kann zur besseren Anlage am Baumstamm 35 gebogen ausgebildet sein. Bei einer entsprechend breiten Ausbildung der Zangenteile 31, 32 (bezogen auf ihre Ausdehnung in Richtung der Achsen 29, 30) kann der Abstützarm 34 auch entfallen.

Der Baumstamm 35 ist somit an seinem dem Zugfahrzeug 1 zugewandten Ende 37 vom Boden 36 abgehoben, vorzugsweise um mindestens 30 cm, und stützt sich am anderen Ende 39 auf dem Boden 36 ab, wie in Fig. 1 dargestellt. In dieser Stellung kann er vom Zugfahrzeug 1 bei freigeschalteten Stellantrieben 12, 15 geschleppt werden. Der Greifer 6 ist hierbei gegen eine Verschwenkung (entgegen der ersten Drehrichtung) gesichert, insbesondere durch den Greifer-Stellantrieb 21).

Die Freigabe der Stellantriebe 12, 15 kann durch Bedienung eines entsprechenden Betätigungselementes durch den Benutzer mittels einer elektrischen Steuerung erfolgen. Beispielsweise kann bei Betätigung eines für das Anheben des Endes 37 des Baumstammes 35 vorgesehenen Betätigungselementes von der Steuereinrichtung der erste und zweite Stellantrieb 12, 15 freigeschaltet werden und der Greifer 6 mittels des Greifer-Stellantriebs 21 um die horizontale Greifer-Schwenkachse 20 verschwenkt werden. Vorzugweise wird von der elektrischen Steuerung vor einer Freischaltung des ersten Stellantriebs 12 und des zweiten Stellantriebs 15 geprüft, ob der Greifer-Stellantrieb in Richtung eines Schließens des Greifers 6 unter Last steht, so dass ohne gegriffenen Baumstamm 35 keine Freigabe des ersten Stellantriebes 12 und des zweiten Stellantriebs 15 erfolgt.

Wenn nach dem Abladen des Baumstammes der Ausleger mittels des ersten Stellantriebs 12 angehoben wird, so dass der erste Stellantrieb 12 unter Last steht, wird vorteilhafterweise, falls die Freischaltung des zweiten Stellantriebs 15 noch Aufrecht ist, diese aufgehoben.

Zweckmäßigerweise wird der Baumstamm 35 zumindest im Bereich derjenigen Hälfte seiner Längserstreckung vom Greifer 6 gegriffen, die an das dem Zugfahrzeug zugewandte Ende des Baumstamms 35 anschließt. Vorzugsweise wird der Baumstamm 35 vom Greifer 6 in der Nähe eines seiner Enden 37, 39 gegriffen.

Bezogen auf die Vorwärtsfahrtrichtung des Zugfahrzeuges, das ist die Fahrtrichtung, in der der Baumstamm 35 hinter dem Zugfahrzeug 1 hergeschleppt wird, legt die Anlenkung des Auslegers 5 an der Lagereinheit 7 weiter vorne als die Anlenkung der Lagereinheit 7 an der Trageinheit 10, was für die beim Schleppen auf das Zugfahrzeug auftretenden Lasten vorteilhaft ist. Hierbei liegt die Anlenkung des Auslegers 5 an der Lagereinheit 7 vorzugsweise möglichst tief, beispielsweise um weniger als 10% höher als die Bodenfreiheit des Zugfahrzeuges, was ebenfalls vorteilhaft für die auftretenden Lasten ist.

Unterschiedliche Modifikationen des gezeigten Ausführungsbeispiels sind denkbar und möglich. Beispielsweise kann eine erfindungsgemäße Holzrückeeinrichtung auch mit einer Seilwinde kombiniert sein. Um einen ausreichenden Platz für die Seilwinde zu schaffen, kann hierzu der Ausleger 5 beispielsweise derart ausgebildet sein, dass er in seiner in Fig. 1 dargestellten Stellung ausgehend von der horizontalen Ausleger-Schwenkachse 8 zunächst einen im Wesentlichen horizontal vom Zugfahrzeug 1 wegverlaufenden Abschnitt aufweist.

Denkbar und möglich wäre beispielsweise auch, dass der Ausleger 5 um die vertikale Ausleger-Schwenkachse 9 verschwenkbar mit der Lagereinheit 7 verbunden ist, welche mit der Trageinheit 10 um die horizontale Ausleger-Schwenkachse 8 verbunden ist.

Weiters ist es denkbar und möglich, dass der Greifer 6 zusätzlich um eine vertikale Greifer-Schwenkachse verschwenkbar ist. Diese weitere Verschwenkmöglichkeit kann frei sein oder es kann ein zusätzlicher Stellantrieb zur Verstellung des Greifers um diese Schwenkachse vorgesehen sein. Eine zusätzliche Verschwenkmöglichkeit um eine Horizontale, rechtwinklig zur Greifer-Schwenkachse 20 stehende Achse könnte grundsätzlich vorgesehen sein, falls diese feststellbar (fixierbar) ist.

### Legende zu den Hinweisziffern:

- 1: Zugfahrzeug
- 2: Unterlenker
- 3: Unterlenker
- 4: Oberlenker
- 5: Ausleger
- 6: Greifer
- 7: Lagereinheit
- 8: horizontale Ausleger-Schwenkachse
- 9: vertikale Ausleger-Schwenkachse
- 10: Trageinheit
- 11: Säule
- 12: erster Stellantrieb
- 13: Zylinder
- 14: Gestänge
- 15: zweiter Stellantrieb
- 16: oberer Träger
- 17: unterer Träger
- 18: Endstück
- 19: Endstück
- 20: horizontale Greifer-Schwenkachse
- 21: Greifer-Stellantrieb
- 22: Zylinder
- 23: Lasche
- 24: Stange
- 25: Stange
- 26: Gurt
- 27: Gurt
- 28: Basisstück
- 29: Achse
- 30: Achse
- 31: Zangenteil
- 32: Zangenteil
- 33: Zangen-Stellantrieb
- 34: Abstützarm
- 35: Baumstamm
- 36: Boden
- 37: Ende
- 38: Leiste
- 39: Ende

## Patentansprüche

1. Holzrückeeinrichtung für ein Zugfahrzeug (1), welche einen Ausleger (5), der mittels eines ersten Stellantriebs (12) um eine horizontale Ausleger-Schwenkachse (8) und mittels eines zweiten Stellantriebs (15) um eine vertikale Ausleger-Schwenkachse (9) verschwenkbar ist, und zum Greifen mindestens eines Baumstammes (35) einen vom Ausleger (5) getragenen Greifer (6) umfasst, der um eine horizontale Greifer-Schwenkachse (20) gegenüber dem Ausleger (5) verschwenkbar ist, wobei der erste Stellantrieb (12) freischaltbar ist, **dadurch gekennzeichnet, dass** der Greifer (6) mittels eines Greifer-Stellantriebs (21) um die horizontale Greifer-Schwenkachse (20) verschwenkbar ist.

2. Holzrückeeinrichtung nach Anspruch 1, **dadurch gekennzeichnet, dass** auch der zweite Stellantrieb (15) freischaltbar ist.

3. Holzrückeeinrichtung nach Anspruch 1 oder 2, **dadurch gekennzeichnet, dass** die horizontale Greifer-Schwenkachse (20) rechtwinklig zur Längserstreckung des Auslegers (5) ausgerichtet ist.

4. Holzrückeeinrichtung nach einem der Ansprüche 1 bis 3, **dadurch gekennzeichnet, dass** die horizontale Ausleger-Schwenkachse (8) parallel zur horizontalen Greifer-Schwenkachse (20) liegt.

5. Holzrückeeinrichtung nach einem der Ansprüche 1 bis 4, **dadurch gekennzeichnet, dass** eine Lagereinheit (7) vorgesehen ist, an der der Ausleger (5) verschwenkbar gelagert ist und die ihrerseits verschwenkbar mit dem Zugfahrzeug (1) verbindbar ist.

6. Holzrückeeinrichtung nach Anspruch 5, **dadurch gekennzeichnet, dass** der Ausleger (5) um die horizontale Ausleger-Schwenkachse (8) verschwenkbar mit der Lagereinheit (7) verbunden ist, die ihrerseits um die vertikale Ausleger-Schwenkachse (9) verschwenkbar ist.

7. Holzrückeeinrichtung nach einem Anspruch 5 oder 6, **dadurch gekennzeichnet, dass** die Anlenkung des Auslegers (5) an der Lagereinheit (7) bezogen auf die Vorwärtsfahrtrichtung des Zugfahrzeuges (1) weiter vorne als die Anlenkung der Lagereinheit (7) am Zugfahrzeug (1) oder einem mit diesem verbundenen Teil liegt.

8. Holzrückeeinrichtung nach einem der Ansprüche 5 bis 7, **dadurch gekennzeichnet, dass** eine mit dem Zugfahrzeug (1) verbindbare Trageinheit (10) vorhanden ist, welche die Lagereinheit (7) verschwenkbar lagert.

9. Holzrückeeinrichtung nach einem der Ansprüche 1 bis 8, **dadurch gekennzeichnet, dass** bei einer Verschwenkung des Greifers (6) um seine horizontale Greifer-Schwenkachse (20) in eine erste Drehrichtung zum Abheben eines dem Zugfahrzeug (1) zugewandten Endes (37) eines vom Greifer (6) gegriffenen Baumstammes (35) vom Boden (36) der Baumstamm (35) vom Greifer (6) gegen eine Verdrehung gegenüber dem Greifer (6) in eine der ersten Drehrichtung entgegengesetzte zweite Drehrichtung gesichert ist.

10. Holzrückeeinrichtung nach einem der Ansprüche 1 bis 9, **dadurch gekennzeichnet, dass** eine elektrische Steuerung vorhanden ist, von der eine Freischaltung des ersten Stellantriebes (12) und des zweiten Stellantriebes (15) nur bei in Richtung eines Schließens des Greifers (6) unter Last stehendem Greifer-Stellantrieb (21) freigegeben wird.

11. Verfahren zum Holzrücken mittels einer an einem Zugfahrzeug (1) angebrachten Holzrückeeinrichtung, welche einen Ausleger (5), der mittels eines ersten Stellantriebes (12) um eine horizontale Ausleger-Schwenkachse (8) und mittels eines zweiten Stellantriebes (15) um eine vertikale Ausleger-Schwenkachse (9) verschwenkbar ist, und zum Greifen mindestens eines Baumstammes (35) einen vom Ausleger (5) getragenen Greifer (6) umfasst, der um eine horizontale Greifer-Schwenkachse (20) gegenüber dem Ausleger (5) verschwenkbar ist, **dadurch gekennzeichnet, dass** ein dem Zugfahrzeug (1) zugewandtes Ende (37) des vom Greifer (6) gegriffenen, zunächst noch auf dem Boden (36) aufliegenden Baumstammes (35) durch Verschwenkung des Greifers (6) um die horizontale Greifer-Schwenkachse (20) mittels eines Greifer-Stellantriebes (21) vom Boden (36) abgehoben wird, während sich das andere, vom Zugfahrzeug (1) abgewandte Ende (39) auf dem Boden (36) abstützt, wobei der erste Stellantrieb (12) freigeschaltet ist.

12. Verfahren nach Anspruch 11, **dadurch gekennzeichnet, dass** beim Schleppen des Baumstammes (35) mit dem Zugfahrzeug (1) der Greifer (6) gegen eine Verschwenkung um die horizontale Greifer-Schwenkachse (20) festgestellt ist, vorzugsweise durch den Greifer-Stellantrieb (21) und sowohl der erste Stellantrieb (12) als auch der zweite Stellantrieb (15) freigeschaltet sind.
